# EUROPEAN PATENT APPLICATION

(11) **EP 0 955 736 A2**
(43) Date of publication of application: **10.11.1999**
(21) Application number: 99303551.8
(22) Date of filing: 06.05.1999
(51) Int. Cl.: H04B 7/005

(54) **Method and apparatus for providing power control in a multi-carrier wide band CDMA system**

(30) Priority: 06.05.1998 US 73484
(71) Applicant: NOKIA MOBILE PHONES LTD., 02150 Espoo (FI)
(72) Inventor: Kansakoski, Antti, San Diego, CA 92122 (US); Tran, Jean-Marie, San Diego, CA 92122 (US)
(74) Representative: Higgin, Paul

(57) **Abstract**

A wireless telecommunications system includes at least one base station, at least one mobile station, and power control circuitry implemented in the base station and the mobile station. N/X power control indications sent from the mobile station to the base station are used to provide closed loop power control to N subchannels, where N is a total number of subchannels in use between the base station and the mobile station, and where X is a positive integer having a value within a range greater than or equal to one and less than N such that N/X, in one case, is an integer number. In one embodiment each of the N subchannels is transmitted through a separate one of N adjustable gain stages, and N/X power control indications generated at the mobile station are employed to vary the gain of the N adjustable gain stages. In another embodiment a plurality of adjustable gain stages associated with a plurality of subchannels are controlled using a same gain control signal. In the presently preferred, but not limiting embodiment, the system is a wideband, multi-carrier spread spectrum system, and the N subchannels can be overlaid on up to N other carriers.

## Description

This invention relates generally to radiotelephone systems and, in particular, to a radiotelephone system having multi-carrier, wideband code division multiple access (WCDMA) capability.

A proposed IS-95 third generation (3G) radiotelephone system has a wideband, spread spectrum radio interface that uses CDMA technology. The system is expected meet all of the requirements for the next generation evolution of the current TlA/EIA-95-B family of standards. This includes providing support for the following: a wide range of operating environments (indoor, low mobility, full mobility, and fixed wireless); a wide performance range (from voice and low speed data to very high speed packet and circuit data services); and a wide range of advanced services (including voice only, simultaneous voice and data, data only, and location services). Support is also provided for an advanced Multimedia Quality of Service (QoS) Control capability supporting multiple concurrent voice, high speed packet data, and high speed circuit data services, along with sophisticated QoS management capabilities. A modular structure is proposed to support existing Upper Layer Signaling protocols as well as a wide range of future third generation Upper Layer Signaling protocols. The proposed system is also expected to provide a seamless interoperability and handoff with existing TlA/EIA-95-B systems, and to provide a smooth evolution from existing TIA/EIA-95-B based systems (including support for overlay configurations within the same physical channel as existing TIA/EIA-95-B systems.) The proposed system will also support highly optimized and efficient deployments in clear spectrum (in cellular, PCS, and IMT-2000 spectrum), and will offer support for existing TIA/EIA-95-B services, including speech coders, packet data services, circuit data services, fax services, Short Messaging Services (SMS), and Over the Air Activation and Provisioning.

Of particular interest to the teaching of this invention is an ability to provide Nx1.25 MHz (N=1, 3, 6, 9, and 12) Multi-Carrier systems that can be deployed as an overlay on up to N 1.25 MHz TIA/EIA-95-B carriers. In this configuration the resulting system can concurrently provide both second generation and third generation services to second generation (TIA/EIA-95-B) and third generation (IS-95 3G) mobile stations. When operated in the overlay configuration, the second and third generation systems share common pilot channels, and can optionally share common paging channels. The third generation spread spectrum system can also be deployed in another set of channels within the same or in a different frequency band.

In general, the IS-95 3G system provides the ability to coexist with TlA/EIA-95-B in the same frequency channel via the overlay configuration, as well as an ability to coexist with TIA/EIA-95-B systems in the same frequency band.

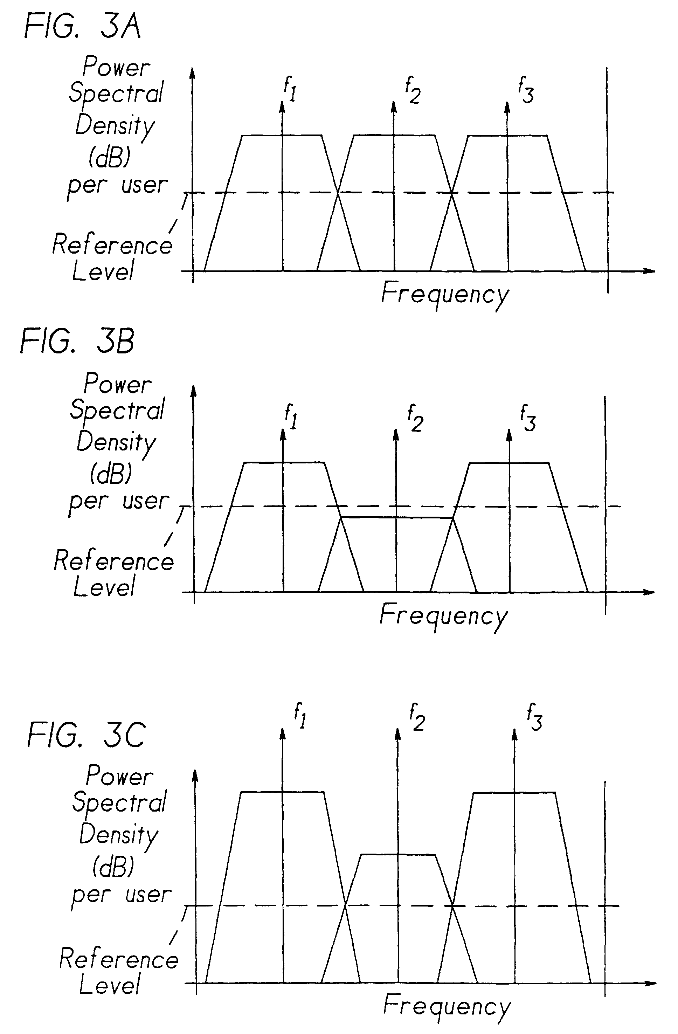

As can be appreciated by those skilled in the art, in order to fulfil the foregoing requirements it is important to properly power control the forward link transmissions from a third generation spread spectrum CDMA base station to a mobile station when operating with one of the multi-carrier overlay configurations discussed above. For example, Fig. 3A illustrates an exemplary and ideal multi-carrier spectrum as received at the mobile station from the forward link from the base station. In this example three subchannels are received, each having a 1.25 MHz bandwidth centered on carriers of frequency f₁, f₂ and f₃. In this example the bandwidths of the three subchannels overlap, while in other embodiments there may be no overlap between the subchannel bandwidths.

However, due to fading in the forward link the actual spectrum received at the mobile station may resemble that shown in Fig. 3B, wherein the received power spectral density of the subchannel centered on f₂ is significantly reduced relative to the first and third subchannels.

It is noted that the coherence bandwidth of the channel (i.e., the bandwidth for which the amplitude and phase of the received signals have a high degree of similarity) is of order 1/T_{d}, where T_{d} is the delay spread. Since delay spreads vary between 0.5 and 3 microseconds in typical suburban and urban environments, the coherence bandwidth orders vary between about 0.3 and 2 MHz. Hence the example illustrated in Fig. 3B is representative of actual conditions.

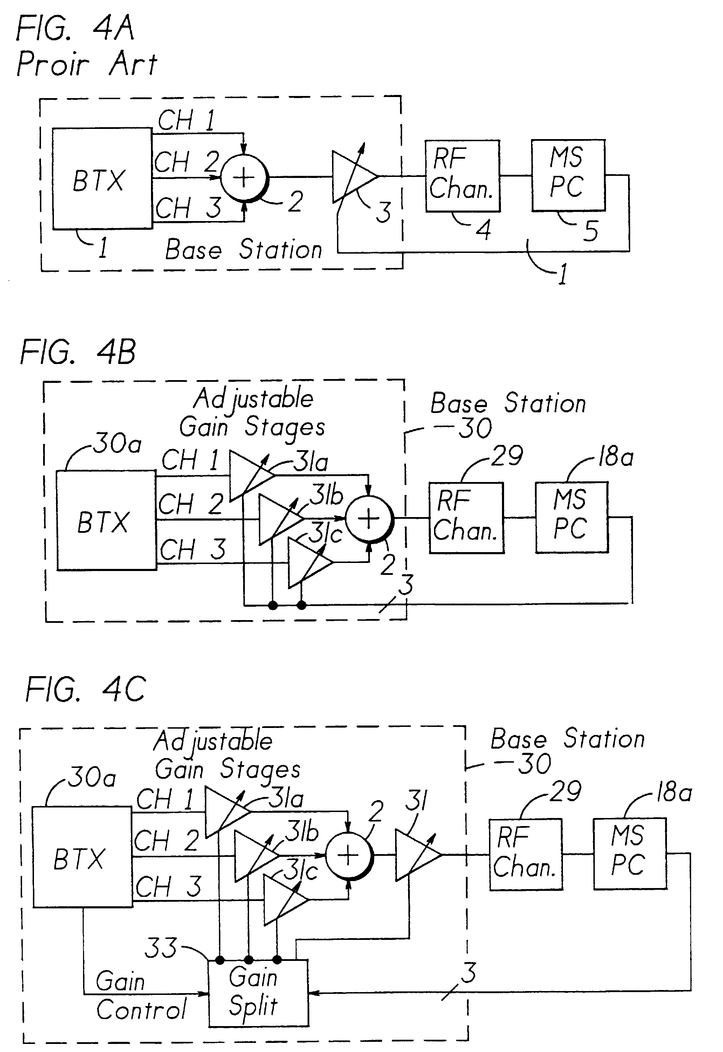

Fig. 3C shows the undesirable result of applying closed loop power control over the entire band. This can be accomplished using the arrangement shown in Fig. 4A, wherein a base station transmitter (BTX) 1 provides, by example, three subchannels (CH1-CH3) which are summed at node 2 and amplified by a variable gain amplifier 3. The output of the amplifier 3 is transmitted on a radio channel 4, where selective fading may occur as shown in Fig. 3B. The selectively faded subchannel signals are received by a mobile station and operated on by power control (PC) circuitry 5. The mobile station then transmits back to the base station indications of the received signal to noise ratio or signal power or strength over the entire band occupied by channels 1-3. The base station operates on these indications to control the gain of amplifier 3, thus providing a closed-loop power control function.

It should be noted that in this case, in order to overcome the fading in the second subchannel, all of the subchannels are transmitted by the base station transmitter 1 with the same, higher power. That is, in order to increase the received signal strength of the second subchannel the first and third subchannels are transmitted at significantly higher levels. Unfortunately, this results in preserving the unbalanced received signal strengths at the mobile station, as shown in Fig. 3C, as well as adding interference.

More particularly, the signal levels of CH1 and CH3 can be raised to levels which are more than adequate (i.e., too high) for the required demodulation performance. This condition can then create additional interference for other mobile stations in the same cell, as well as for mobile stations located in other cells. This additional interference has the effect of reducing the overall capacity of the network, and is obviously undesirable.

Furthermore, an additional performance degradation will be experienced on carrier f2, when a large power imbalance exists as presented in Fig. 3B and 3C, since the energy in the adjacent channels 1 and 3 will leak into the band of channel 2.

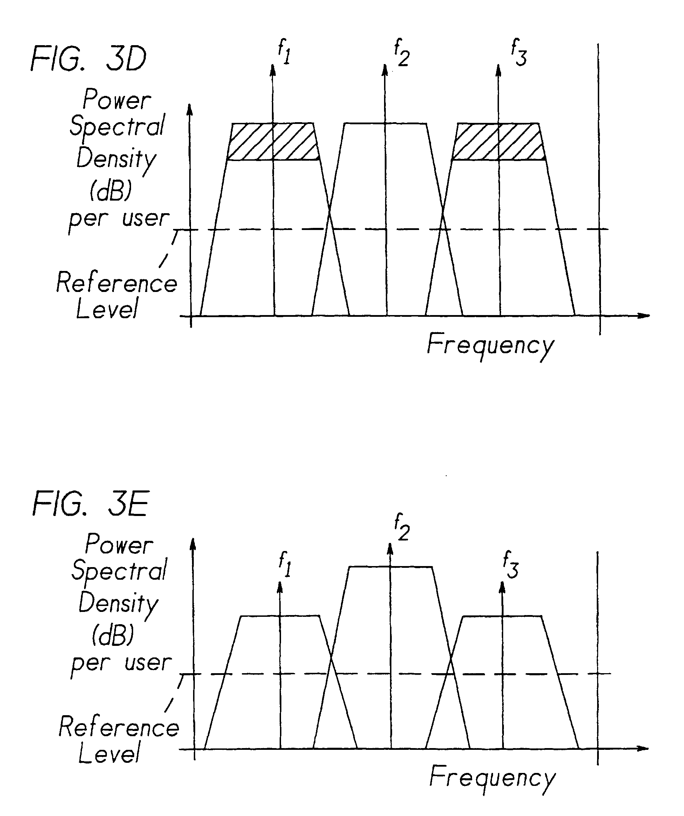

Referring to Fig. 3D, a related problem occurs when it is desired to overlay just one of the third generation subchannels, such as the second channel. In this case it may be desirable to transmit the second band at a higher power level in order to mitigate the additional interference that results from the overlaid second generation band. However, under conventional practice this would result in transmitting all of the bands at the higher power level (indicated by the cross-hatched portions of bands 1 and 3.) This is undesirable in that energy can leak from band to band, resulting in increased interference for users in all three bands.

It can thus be appreciated that it would be desirable to have a technique whereby multiple carriers can be power controlled so as to combat the effects of selective fading, and to also have a technique whereby multiple carriers can be power controlled so as to combat the effects of interference due to being overlaid with other carriers, such as second generation spread spectrum carriers.

It is desirable to provide independent power control on a plurality of carriers transmitted to a mobile station.

It is desirable to provide an improved wireless telecommunications system wherein multiple carriers that are transmitted to a mobile station are separately power controlled so as to selectively compensate for fades and other signal impairments that occur to one or more of the multiple carriers.

It is desirable to provide an improved wireless telecommunications system wherein subchannels transmitted to a mobile station are separately power controlled so as to selectively compensate for fades and other signal impairments that occur to one or more of the subchannels, wherein at least one of the subchannels is overlaid.

It is desirable to provide an improved wireless telecommunications system wherein subchannels, including one or more overlaid subchannels, are separately power controlled so as to selectively enable an overlaid subchannel or subchannels to be transmitted with a higher power so as to mitigate the effect of increased same-channel interference.

It is desirable to provide an improved third generation spread spectrum wireless telecommunications system wherein power control commands or indications sent between a mobile station and a base station are used to provide closed loop power control separately over N subchannels.

It is desirable to provide an improved third generation spread spectrum wireless telecommunications system wherein N/X power control commands or indications sent from a mobile station to a base station are used to provide closed loop power control for N subchannels, wherein N is the number of subchannels in use and wherein X is a positive integer having a value within a range greater than or equal to one and less than N such that N/X is an integer number.

It is desirable to provide an ability to have independent power control on multiple carriers transmitted to a mobile station, thereby providing an enhanced wireless telecommunications system wherein third generation Multi-Carrier channels overlaid with other channels, such as IS-95B channels, may require additional power depending on the IS-95B cell loading.

The foregoing and other problems are addressed and the advantages are realized by methods and apparatus in accordance with embodiments of this invention.

According to one aspect of the present invention there is provided a wireless telecommunications system includes at least one base station, at least one mobile station, and power control circuitry implemented in the base station and the mobile station. N/X power control indications sent from the mobile station to the base station are used to provide closed loop power control to N subchannels, where N is a total number of subchannels in use between the base station and the mobile station, and where X is a positive integer having a value within a range greater than or equal to one and less than N such that N/X is an integer number. In one embodiment each of the N subchannels is transmitted through a separate one of N adjustable gain stages, and the NIX power control indications generated at the mobile station are employed to vary the gain of the N adjustable gain stages. In another embodiment a plurality of adjustable gain stages associated with a plurality of adjacent subchannels are controlled using a same gain control signal. In another embodiment X groups of the N subchannels can be summed and amplified by N/X adjustable gain stages controlled by the N/X power control indications. The controls can be implemented using analog signals or digital signals. In the presently preferred, but not limiting embodiment, the system is a wideband, multi-carrier spread spectrum system, and the N subchannels can be overlaid on up to N other carriers.

According to another aspect of the present invention there is provided a wireless telecommunications system in accordance with an aspect of this invention comprises at least one base station; at least one mobile station; and power control circuitry implemented in the base station and the mobile station. A plurality of power control indications sent from the mobile station to the base station are used to provide power control separately to a plurality of sets of subchannels. In one case each set of subchannels contains a same number of subchannels, while in another case at least one set of subchannels contains a number of subchannels that differs from a number of subchannels contained in another one of the plurality of sets of subchannels.

According to another aspect of the invention there is provided a method of operating a wireless telecommunications system, comprising steps of providing at least one base station and at least one mobile station; transmitting N subchannels from the base station to the mobile station; deriving, in the mobile station, N/X power control indications for the N subchannels, wherein N is a total number of subchannels transmitted from the base station to the mobile station, and wherein X is a positive integer having a value within a range greater than or equal to one and less than N such that N/X is an integer number; transmitting the N/X power control indications back to the base station; and providing, in the base station, closed loop power control for individual ones or groups of the N subchannels in accordance with the N/X power control indications.

According to a further aspect of the invention there is provided a base station for use in a Multi-Carrier Wide Band Spread Spectrum wireless telecommunications system, said base station comprising transmitter power control circuitry that is responsive to N/X power control indications sent from a mobile station to said base station for providing closed loop power control for N subchannels transmitted to the mobile station, wherein N is a total number of subchannels in use between said base station and the mobile station, and wherein X is a positive integer having a value within a range greater than or equal to one and less than N such that N/X is an integer number.

According to still further aspects of the present invention there is provided a base station as claimed in claims 14 or claim 15.

According to a further aspect of the present invention there is provided a telecommunications system as claimed in claim 16 or claim 17.

The above set forth and other features of the invention are made more apparent in the ensuing Detailed Description of the Invention when read in conjunction with the attached Drawings, wherein:
Fig. 1 is a block diagram of a CDMA mobile station that is constructed and operated in accordance with this invention;
Fig. 2 is an elevational view of the mobile station shown in Fig. 1, and which further illustrates a CDMA communication system to which the mobile station is bidirectionally coupled through an RF channel;
Fig. 3A shows an ideal case wherein three separate subchannel signals are received at a mobile station with the same power spectral density;
Fig. 3B shows a more realistic case wherein at least one of the subchannels is received at a reduced power spectral density relative to the other subchannels;
Fig. 3C shows the undesirable result of power controlling the entire band occupied by the subchannels in order to boost the power spectral density per user of the faded subchannel;
Fig. 3D shows a related problem that occurs when it is desired to overlay just one subchannel, and where all of the subchannels must be transmitted at a higher power level in order to compensate for increased same-channel interference in the overlaid subchannel;
Fig. 3E shows the beneficial effect of applying the selective subchannel power control, in accordance with this invention, to the case of Fig. 3D so as to transmit only the overlaid subchannel at the higher power level;
Fig. 4A depicts a simplified block diagram of a prior art base station and mobile station arrangement that would result in the undesirable situation shown in Fig. 3C;
Figs. 4B, 4C, 4D and 4E each illustrate an embodiment of a base station and mobile station arrangement in accordance with this invention that employs subchannel adjustable gain stages to overcome the problems in the conventional approach; and
Fig. 5 illustrates an altemate embodiment wherein a plurality of subchannel adjustable attenuator stages are employed for varying the transmitted power of different ones of the subchannels.

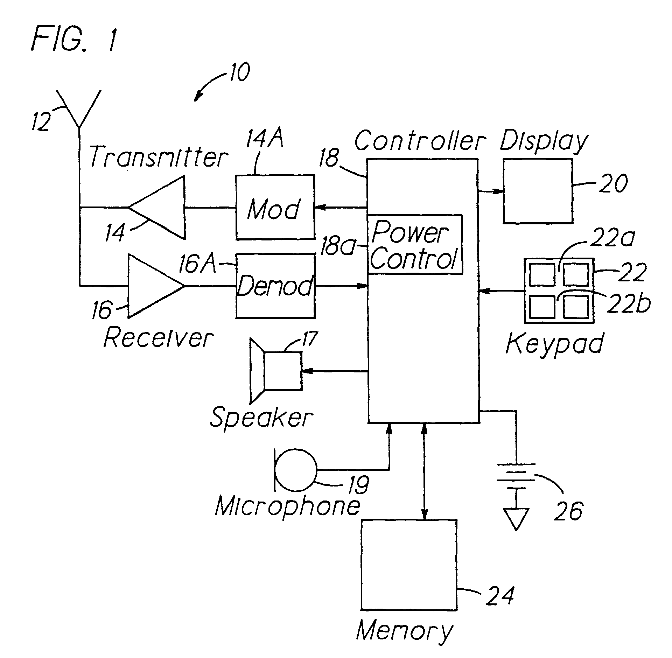

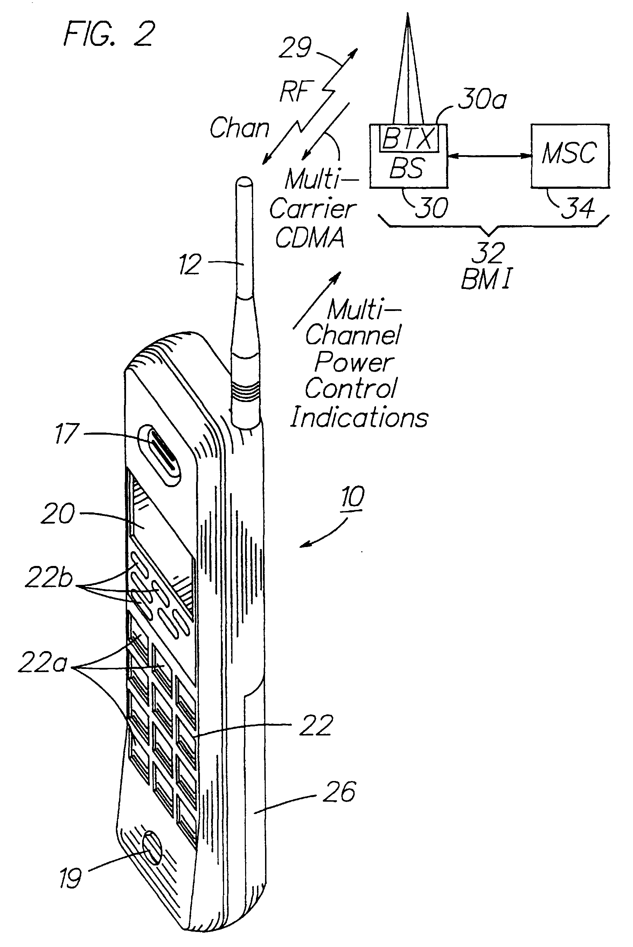

Reference is made to Figs. 1 and 2 for illustrating a wireless user terminal or mobile station 10, such as but not limited to a cellular radiotelephone or a personal communicator, that is suitable for practicing this invention. The mobile station 10 indudes an antenna 12 for transmitting signals to and for receiving signals from a base site or base station 30 over an RF channel 29. The base station 30 is a part of a cellular network comprising a Base Station/Mobile Switching Center/Interworking function (BMI) 32 that includes a mobile switching center (MSC) 34. The MSC 34 provides a connection to landline trunks when the mobile station 10 is involved in a call. The base station 30 includes a base station transmitter (BTX) 30a wherein resides embodiments of the circuitry shown in one of Figs. 4B-4E.

The mobile station includes a modulator (MOD) 14A, a transmitter 14, a receiver 16, a demodulator (DEMOD) 16A, and a control and processing unit, referred to as a controller 18, that provides signals to and receives signals from the transmitter 14 and receiver 16, respectively. These signals include signalling information in accordance with the air interface standard of the applicable cellular system, and also user speech and/or user generated data. The air interface standard is assumed for this invention to include a spread spectrum, code division multiple access (CDMA) air interface that is identical to or similar to the proposed third generation spread spectrum system discussed earlier, although the teaching of this invention is not intended to be limited only to this specific type of system, or for use only with an IS-95 type of mobile station, or for use only in spread spectrum systems.

Of particular interest to this invention is a closed loop power control block 18a that is used, in cooperation with the base station transmitter (BTX) 30a and corresponding closed loop power controller, to implement the teachings of this invention. A conventional open loop power control function (not shown) may typically also be present, but is not discussed herein.

Also for the purposes of this invention it is assumed that the base station 30 is capable of transmitting N subchannels to the mobile station 10, and that the mobile station power control circuitry 18a is capable of separately deriving power control information for each received subchannel, and for transmitting the power control indications back to the base station 30. The demodulator 16A is a rake receiver which includes a plurality of finger decorrelators for separately despreading each subchannel using a subchannel pseudonoise (PN) spreading code. The power control indications may be based on the signal to noise ratio (SNR) at the output of the rake receiver or on the amplitude or power of the signal from the rake receiver. The power control indications can also be based on one or more of the power levels on each subchannel, symbol error rates of the data contained in each subchannel, and/or bit or frame error rates determined after decoding. Various decorrelators, decoders, and closed loop power control circuits are known in the art, and will not be discussed with any specificity herein.

Reference may be had to the following commonly assigned U.S. Patents for teaching various aspects of spread spectrum circuitry and methods: U.S. Patent No. 5,440,597 issued 8/8/95 by S. Chung et al., entitled "Double Dwell Maximum Likelihood Acquisition System With Continuous Decision Making For CDMA And Direct Spread Spectrum System"; U.S. Patent No. 5,566,201 issued 10/15/96 by K. Ostman, entitled "Digital AGC For A CDMA Radiotelephone"; U.S. Patent No. 5,548,616 issued 8/20/96 by L. Mucke et al., entitled "Spread Spectrum Radiotelephone Having Adaptive Transmitter Gain Control"; and U.S. Patent No. 5,491,718 issued 2/13/96 by A. Gould et al., entitled "CDMA Radiotelephone Having Optimized Slotted Mode And Long Code Operation". The disclosures of these commonly assigned U.S. Patents are incorporated by reference herein in their entireties to the extent that no conflict occurs with the teachings of this invention.

It is understood that the controller 18 also includes the circuitry required for implementing the audio and logic functions of the mobile station. By example, the controller 18 may be comprised of a digital signal processor (DSP) device, a microprocessor or microcomputer unit (MCU), digital to analog converters, and other support circuits. The control and signal processing functions of the mobile station are allocated between these devices according to their respective capabilities. In some embodiments all or some of the functions of the modulator 14A and demodulator 16A may also be included in the controller 18, specifically in the DSP portion thereof.

A user interface includes a conventional earphone or speaker 17, a conventional microphone 19, a display 20, and a user input device, typically a keypad 22, all of which are coupled to the controller 18. The keypad 22 includes the conventional numeric (0-9) and related keys (#,*) 22a, and other keys 22b used for operating the mobile station 10. The mobile station 10 also includes a battery 26 for powering the various circuits that are required to operate the mobile station.

The mobile station 10 also includes various memories, shown collectively as the memory 24, wherein are stored a plurality of constants and variables that are used by the controller 18 during the operation of the mobile station, as well as operating programs.

It should be understood that the mobile station 10 can be a vehicle mounted or a handheld device. It should further be appreciated that the mobile station 10 can be capable of operating with more than one air interface standard, modulation type, and access type.

Referring first to Fig. 4B, the problems inherent in the conventional power control technique discussed above are overcome in a first embodiment of this invention by providing, for the case of three subchannels (such as three 1.25 MHz 3G subchannels which may be overlaid on up to three 1.25 MHz 2G spread spectrum channels), three separate adjustable gain stages 31a, 31b, 31c at the BTX 30a (such as three variable gain amplifiers), and by transmitting from the mobile station 10 power control circuitry 18a three separate power control indications, one for each received subchannel. Each power control indication is then used to separately control the gain of the associated adjustable gain stage 31a-31c so as to selectively compensate each subchannel for fades and other RF channel 29 impairments, thereby providing multi-carrier or multi-channel closed loop power control. The end result is that the received spectrum at the mobile station 10 more closely resembles the ideal case shown in Fig. 3A, and not the undesirable case shown in Fig. 3C.

In the embodiment of Fig. 4C the BTX 30a generates a single gain signal that is applied to a gain splitter 33. The gain splitter 33 also receives the three subchannel power control indications from the mobile station power control block 18a, and weights or otherwise modifies each split gain signal so as to properly adjust the gain of the corresponding one of the adjustable gain subchannel stages 31a-31c for approximately equalizing the amplitudes of the amplified subchannel signals. The outputs of the stages 31a-31c are then summed at node 2, and the sum signal is provided to the separate, common, adjustable gain stage 31, which may be controlled with the unsplit and unmodified gain signal output from the BTX 30a.

Thus far the invention has been described in the context of a three band multi-carrier spread spectrum system. However, it should be realized that the inventive concept of controlling the subchannel powers applies generally to N-band multi-carrier systems, wherein N equals, by example, 2, 3, 4 ..., etc. In a typical Multi-Carrier spread spectrum case of most interest to this invention N may equal 3, 6, 9, 12, 16, etc. For example, for a number of sub-bands greater than three, it may be desirable to group X adjacent sub-bands and power control each group as a single entity. This enables one to reduce the number of power control indications sent from the mobile station 10 on the reverse link to the BTX 30a.

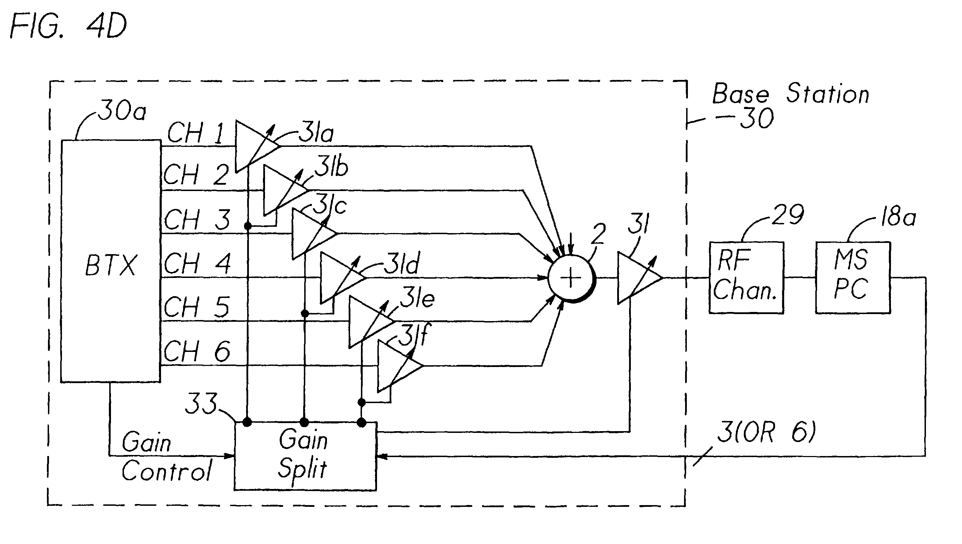

Referring to Fig. 4D, for the example of N=6, each of the six subbands can be power controlled using six adjustable gain stages 31a-31f with three or six power control indications. If three power control indications are used, then the MS PC 18a transmits on the reverse channel three indications corresponding to a combination of CH1 and CH2 for controlling amplifiers 31a and 31b, CH3 and CH4 for controlling amplifiers 31c and 31d, and CH5 and CH6 for controlling amplifiers 31e and 31f. If six power control indications are used, then the MS PC 18a transmits on the reverse channel six indications each corresponding to one of CH1-CH6. In this case the power control indications are combined in the splitter 33a into three power control indications for controlling CH1 and CH2 via amplifiers 31a and 31b, CH3 and CH4 via amplifiers 31c and 31d, and CH5 and CH6 via amplifiers 31e and 31f.

Fig. 4E shows a case where X=2 bands are grouped together (e.g., summed with summers 2a-2c) which are then controlled by a separate power control indication derived for the N/X bands. More particularly, N=6 subbands are first combined into three combined subbands which are then power controlled in accordance with three power control indications received from the MS PC 18a (i.e., X=2).

As for individual band power control, power control indications for X band segments may be based on the SNR, or on the signal level averaged over the X bands, or the mean or average of the X power control indications. In an alternate embodiment, the combination of power control indications could be done in the base station 30, based on N separate mobile station power control indications. In the preferred embodiment,the power control indications are combined in the mobile station 10, which then transmits back only X (combined) power control indications. Further by example, and for the case of N=16, X may equal four such that four groups of four sub-bands are power controlled together.

Fig. 3E shows the beneficial effect of applying the selective subchannel power control, in accordance with this invention, to the previously discussed case of Fig. 3D so as to transmit only the overlaid subchannel at the higher power level. That is, the transmitted power of only the subchannel centered on f₂ is transmitted with increased power, thereby reducing same-channel interference for users in both the subchannels 1 and 3, as well as adjacent-channel interference for the users in subchannel 2, relative to the case shown in Fig. 3D.

For the embodiment of Fig. 3E it may be desirable for the base station 30 to modify the closed loop power control to reflect, for example, the actual numbers of users in a given channel so as to set the power of the overlaid subchannel at an optimum value. For example, less transmitted power may be required for a case where the second subchannel is lightly loaded, as opposed to a case where the second subchannel is heavily loaded and, thus, where more same-channel interference may exist. Since the base station 30 has knowledge of how many users (and what types of users) are assigned to each channel, the base station 30 can make adjustments in the gain control signal output from the BTX 30a. In this embodiment the BTX 30a thus outputs multiple gain control signals for separately controlling multiple subchannel amplifiers (e.g., 31a-31f in Fig. 4D).

It is important to note that the teachings of this invention are not limited to a particular modulation technique, such as Multi-carrier W-CDMA. That is, the teachings of this invention are not constrained to be used with only this type of modulation technique, and should be given a wider interpretation and scope.

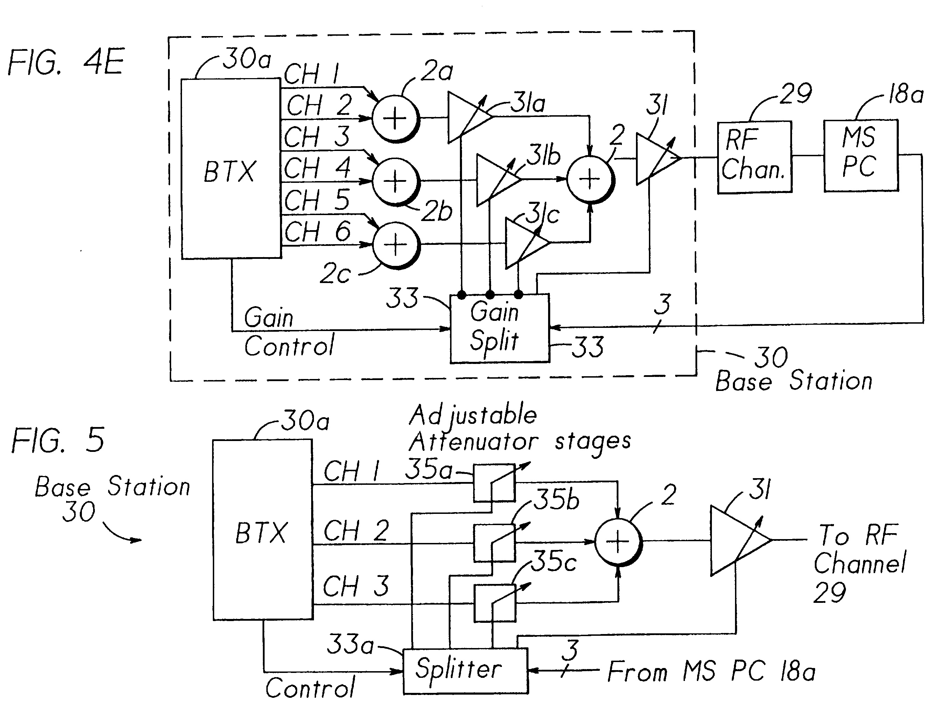

While described above in the context of multiple adjustable gain stages, such as variable gain amplifiers, it is within the scope of the teaching of this invention to employ, as indicated generally in Fig. 5, a single adjustable gain stage 31 preceded by a plurality of adjustable attenuator stages 35a, 35b and 35c, one for each subchannel. In this case a control signal is provided from the BTX 30a and is applied to a splitter 33a, where the power control indications from the MS PC 18a are also applied. The attenuators 35a-35c are controlled by the splitter outputs, as is the gain of the variable gain stage 31.

For the purposes of this invention the end result is the same, in that in the RF channel 29 the transmitted power of individual ones or groups of subchannels can be separately and selectively controlled. As such, for the purposes of this invention the approach shown in Figs. 4B-4E and in Fig. 5 may be generally considered to be one of providing a plurality of 'adjustable gain stages'.

Other suitable schemes for separately controlling the transmitted power of individual ones or groups of the subchannels may occur to those having skill in the art.

Furthermore, the invention has been described thus far in the context of selectively power controlling sets of subchannels or carriers, wherein each set contains the same number of subchannels or carriers (e.g., three sets of two subchannels for the case of N=6, or six sets each having one subchannel.) However, it is within the scope of this invention to selectively power control sets of subchannels or carriers, wherein at least one set contains a different number of subchannels or carriers than at least one other set. For example, for the case of N=6 the mobile station can transmit two power control indications back to the base station for use in separately power controlling two sets of subchannels, wherein one set has four subchannels and another set has two subchannels, or where one set has five subchannels and another set has but one subchannel. In this case N/X is still an integer, but the sets of subchannels do not have an equal number of subchannel members. In another case N/X is not an integer, as for example when N=9 and two power control indications are used in separately power controlling a first set of five subchannels and a second set of four subchannels (i.e., N/X=4.5).

The required signal processing in any of the foregoing embodiments can be implemented in analog form, in digital form, or as a combination of analog and digital processing.

Thus, while the invention has been particularly shown and described with respect to preferred embodiments thereof, it will be understood by those skilled in the art that changes in form and details may be made therein without departing from the scope of the invention.

## Claims

1. A wireless telecommunications system, comprising:
at least one base station;
at least one mobile station; and
power control circuitry implemented in said base station and said mobile station wherein N/X power control indications sent from said mobile station to said base station are used to provide closed loop power control to individual ones or groups of subchannels, wherein N is a total number of subchannels in use between said base station and said mobile station, and wherein X is a positive integer having a value within a range greater than or equal to one and less than N such that N/X is an integer number.

2. A wireless telecommunications system as in claim 1, wherein each of the N subchannels is transmitted through a separate one of N adjustable gain stages, and wherein the N/X power control indications generated at said mobile station are employed to vary the gain of the N adjustable gain stages.

3. A wireless telecommunications system as in claim 1 or 2, wherein a plurality of adjustable gain stages associated with a plurality of adjacent subchannels are power controlled using one gain control signal.

4. A wireless telecommunications system as in claim 1, 2 or 3 wherein the system is a wideband, multi-carrier spread spectrum system.

5. A wireless telecommunications system as in any one of claims 1 to 4, wherein at least one of the N subchannels is overlaid on another carrier.

6. A method of operating a wireless telecommunications system, comprising steps of:
providing at least one base station and at least one mobile station;
transmitting N subchannels from the base station to the mobile station;
deriving, in the mobile station, NIX power control indications for the N subchannels, wherein N is a total number of subchannels transmitted from the base station to the mobile station, and wherein X is a positive integer having a value within a range greater than or equal to one and less than N such that N/X is an integer number;
transmitting the N/X power control indications back to the base station; and
providing, in the base station, closed loop power control for individual ones or groups of the N subchannels in accordance with the N/X power control indications.

7. A method as in claim 6, wherein each of the N subchannels is transmitted through a separate one of N adjustable gain stages, and wherein the N/X power control indications derived in the mobile station are employed to vary the gain of the N adjustable gain stages.

8. A method as in claim 6 or 7, wherein a plurality of adjustable gain stages associated with a plurality of adjacent subchannels are controlled using a same gain control signal.

9. A method as in any one of claims 6 to 8, wherein the system is a wideband, multicarrier spread spectrum system.

10. A method as in any one of claims 6 to 9, wherein the N subchannels are overlaid on up to N other carriers.

11. A base station for use in a Multi-Carrier Wide Band Spread Spectrum wireless telecommunications system, said base station comprising transmitter power control circuitry that is responsive to N/X power control indications sent from a mobile station to said base station for providing closed loop power control for N subchannels transmitted to the mobile station, wherein N is a total number of subchannels in use between said base station and the mobile station, and wherein X is a positive integer having a value within a range greater than or equal to one and less than N such that N/X is an integer number.

12. A base station as in claim 11, wherein each of the N subchannels is transmitted through a separate one of N adjustable gain stages, and wherein the N/X power control indications are generated in the mobile station and are employed to vary the gain of the N adjustable gain stages.

13. A base station as in claim 11 or 12, wherein a plurality of adjustable gain stages associated with a plurality of adjacent subchannels are controlled using a same gain control signal.

14. A base station for use in a Multi-Carrier Wide Band Spread Spectrum wireless telecommunications system, said base station comprising transmitter power control circuitry that is responsive to N/X power control indications sent from a mobile station to said base station for providing closed loop power control for N subchannels, wherein the N subchannels are combined into X combined subchannels, wherein the X combined subchannels are transmitted through a separate one of X adjustable gain stages, wherein N/X power control indications generated at the mobile station are employed to vary the gain of the X adjustable gain stages, wherein N is a total number of subchannels transmitted from said base station to the mobile station, and wherein X is a positive integer having a value within a range greater than or equal to one and less than N such that N/X is an integer number.

15. A base station for use in a Multi-Carrier wide band spread spectrum wireless telecommunications system, said base station comprising transmitter power control circuitry that is responsive to N power control indications sent from a mobile station to said base station for providing closed loop power control for N subchannels transmitted from said base station to the mobile station, wherein the N subchannels are combined into X combined subchannels and the X combined subchannels are transmitted through a separate one of X adjustable gain stages, and wherein N power control indications generated at the mobile station are combined in said base station into X combined power control indications and are employed to vary the gain of the X adjustable gain stages, wherein N is a total number of subchannels transmitted from said base station to the mobile station, and wherein X is a positive integer having a value within a range greater than or equal to one and less than N such that N/X is an integer number.

16. A wireless telecommunications system, comprising:
at least one base station;
at least one mobile station; and
power control circuitry implemented in said base station and said mobile station wherein a plurality of power control indications sent from said mobile station to said base station are used to provide power control separately to a plurality of sets of subchannels, wherein each set of subchannels contains a same number of subchannels.

17. A wireless telecommunications system, comprising:
at least one base station;
at least one mobile station; and
power control circuitry implemented in said base station and said mobile station, wherein a plurality of power control indications sent from said mobile station to said base station are used to provide power control separately to a plurality of sets of subchannels, wherein at least one set of subchannels contains a number of subchannels that differs from a number of subchannels contained in another one of the plurality of sets of subchannels.
